# EUROPEAN PATENT APPLICATION

(11) **EP 4 757 330 A1**
(43) Date of publication of application: **10.06.2026**
(21) Application number: 24851539.7
(22) Date of filing: 16.07.2024
(51) Int. Cl.: H04N 23/60, H04N 23/63, H04N 23/68

(54) **IMAGING DEVICE, IMAGING METHOD, AND PROGRAM**

(30) Priority: 04.08.2023 JP 2023127723
(71) Applicant: Sony Group Corporation, Tokyo 108-0075 (JP)
(72) Inventor: UYAMA Keisuke, Tokyo 108-0075 (JP)
(74) Representative: MFG Patentanwälte Meyer-Wildhagen Meggle-Freund Gerhard PartG mbB
(86) International application number: PCT/JP2024/025425
(87) International publication number: WO 2025/033110

(57) **Abstract**

The present disclosure relates to an imaging device, an imaging method, and a program that enable high-quality imaging with less blurring.

The imaging device includes an imaging control unit 24 that performs control to notify a user that it is an imaging timing in a case where a self-position is a predetermined imaging position in imaging of 3D modeling, a detection unit that detects its own movement after notifying the user that it is the imaging timing, and a stationary determination unit 37 that determines whether or not its own movement is stationary on the basis of a result of the detection unit, and the imaging control unit 24 performs control to execute imaging in a case where its own movement is stationary. The technology of the present disclosure can be applied to, for example, an imaging device or the like that performs 3D modeling.

## Description

### TECHNICAL FIELD

The present disclosure relates to an imaging device, an imaging method, and a program, and more particularly, to an imaging device, an imaging method, and a program capable of performing high-quality imaging with less blurring.

### BACKGROUND ART

As a method of 3D modeling of a 3D object having a three-dimensional shape, there is a method called photogrammetry in which a 3D object is imaged from multiple directions and data (3D data) of a 3D model of the 3D object is generated on the basis of a plurality of obtained captured images.

Furthermore, there is a method called real-time 3D modeling, in which 3D data is generated instantaneously (in real-time) on the basis of information such as captured images, pose information, and depth. Moreover, in recent years, a method collectively called neural rendering (for example, neural radiance fields (NeRF) or the like) has also been proposed in which neural fields are configured on the basis of pose of a captured image and the captured image, and an image or a 3D model at an arbitrary viewpoint is generated.

In the imaging of the 3D model, it is common to narrow a diaphragm and perform imaging in order to gain a depth of field. However, narrowing the diaphragm inevitably reduces the amount of light for imaging with appropriate exposure, so it is necessary to increase sensitivity or lengthen a shutter speed.

Although it is not imaging of a 3D model, for example, Patent Document 1 discloses a technology that detects a moving speed of a user, and controls a shutter speed and sensitivity in a case where the moving speed is substantially zero and it is recognized that the user is stationary.

Since increasing the sensitivity leads to degradation of image quality due to noise, a user generally lengthens a shutter speed. In a case of using a longer shutter speed, use of a monopod or a tripod is considered in order to prevent an image from shaking due to minute movement of a camera.

### CITATION LIST

### PATENT DOCUMENT

Patent Document 1: WO 2017/212958 A

### SUMMARY OF THE INVENTION

### PROBLEMS TO BE SOLVED BY THE INVENTION

However, in imaging using a monopod or a tripod, it is difficult to use at the time of 3D model automatic imaging of performing automatic imaging according to movement. This is because, at the time of automatic imaging, the user does not release the shutter, but rather the image is captured at the timing on the device side, so the user does not know the timing of installing a monopod or a tripod. Simply installing a monopod or a tripod and then performing automatic imaging would require the user to determine the position of the camera, which would eliminate the utility of the automatic imaging.

The present disclosure has been made in view of such a situation, and an object thereof is to enable high-quality imaging with less blurring.

### SOLUTIONS TO PROBLEMS

An imaging device according to one aspect of the present disclosure includes:
an imaging control unit that performs control to notify a user that it is an imaging timing in a case where a self-position is a predetermined imaging position in imaging of 3D modeling;
a detection unit that detects its own movement after notifying the user that it is the imaging timing; and
a stationary determination unit that determines whether or not its own movement is stationary on the basis of a result of the detection unit, in which
the imaging control unit performs control to execute imaging in a case where its own movement is stationary.

An imaging method according to one aspect of the present disclosure includes,
by an imaging device:
performing control to notify a user that it is an imaging timing in a case where a self-position is a predetermined imaging position in imaging of 3D modeling;
detecting its own movement after notifying the user that it is the imaging timing;
determining whether or not its own movement is stationary on the basis of a result of detecting its own movement; and
performing control to execute imaging in a case where its own movement is stationary.

A program according to one aspect of the present disclosure is for causing a computer to execute processing including:
performing control to notify a user that it is an imaging timing in a case where a self-position is a predetermined imaging position in imaging of 3D modeling;
detecting its own movement after notifying the user that it is the imaging timing;
determining whether or not its own movement is stationary on the basis of a result of detecting its own movement; and
performing control to execute imaging in a case where its own movement is stationary.

In one aspect of the present disclosure, control is performed to notify the user that it is the imaging timing in a case where the self-position is the predetermined imaging position in imaging of 3D modeling, its own movement is detected after notifying the user that it is the imaging timing, whether or not its own movement is stationary is determined on the basis of a result of detecting its own movement, and control is performed to execute imaging in a case where its own movement is stationary.

Note that the program to be executed by the computer can be provided by being transmitted via a transmission medium or by being recorded on a recording medium.

The imaging device may be an independent device or an internal block configuring one device.

### BRIEF DESCRIPTION OF DRAWINGS

Fig. 1 is a diagram for describing an outline of photogrammetry.
Fig. 2 is a diagram for describing an outline of real-time 3D modeling.
Fig. 3 is a diagram for describing a difference between photogrammetry and real-time 3D modeling.
Fig. 4 is a perspective diagram illustrating an external appearance example of an imaging device according to an embodiment of the present disclosure.
Fig. 5 is a perspective diagram illustrating an external appearance example of the imaging device according to an embodiment of the present disclosure.
Fig. 6 is a diagram for describing a flow of photogrammetry imaging.
Fig. 7 is a diagram for describing processing of the imaging device of the present disclosure.
Fig. 8 is a diagram for describing processing of the imaging device of the present disclosure.
Fig. 9 is a block diagram illustrating a configuration example of the imaging device.
Fig. 10 is a block diagram illustrating a configuration example of a server device.
Fig. 11 is a block diagram illustrating a configuration example of an information processing device that can be configured as the imaging device or the server device.
Fig. 12 is a flowchart for describing timing-presentation stationary-determination automatic imaging processing.
Fig. 13 is a diagram for describing a modification of imaging timing presentation.
Fig. 14 is a diagram for describing an example of imaging timing presentation by a display image.
Fig. 15 is a diagram for describing an example of imaging timing presentation on a navigation screen.
Fig. 16 is a diagram for describing an example of imaging timing presentation on the navigation screen.
Fig. 17 is a flowchart for describing timing-presentation stationary-determination automatic imaging processing.
Fig. 18 is a flowchart for describing timing-presentation stationary-determination automatic imaging processing with an excess prevention determination function.

### MODE FOR CARRYING OUT THE INVENTION

Hereinafter, a mode for carrying out the technology of the present disclosure (hereinafter, referred to as an embodiment) will be described with reference to the accompanying drawings. The description will be given in the following order.
1. 3D modeling
2. External Appearance Example of Imaging Device
3. Problem of Imaging Using Monopod or Tripod
4. Configuration Example of Imaging Device
5. Processing Flow of Timing-Presentation Stationary-Determination Automatic Imaging Processing
6. Modification of Imaging Timing Presentation
7. Example of Combination with Recommended Imaging Position Guide Mark
8. Processing Flow of Timing-Presentation Stationary-Determination Automatic Imaging Processing
9. Processing Flow of Timing-Presentation Stationary-Determination Automatic Imaging Processing with Excess Prevention Determination Function
10. Conclusion

Note that, in the present disclosure, "image acquisition processing" refers to capture of an image with an imaging device including an image sensor (imaging element) in order to obtain image data to be temporarily or permanently recorded in a recording medium. The recording medium in which image data is to be recorded may be inside or outside the imaging device. For example, image data may be immediately recorded in the recording medium in the imaging device, but may be transmitted to another device or transmitted over a network (uploading or the like) and recorded in the recording medium in an external device, instead. The term "image acquisition processing" is used to be distinguished from imaging only for displaying a subject image on a monitor.

In addition, images include both still images and moving images. A captured image refers to a moving image or a still image captured by the image sensor, or an image thereof. That is, a captured image includes an image to be recorded in the recording medium or an image to be displayed on the monitor as a through image or the like. A captured image may be data itself (so-called RAW data) obtained by the image sensor or the like. Furthermore, a captured image may be an image subjected to color separation processing or color conversion processing. Furthermore, a captured image may be an image subjected to signal processing such as defect correction, noise reduction, automatic white balance (AWB), or gamma correction. Moreover, a captured image may be subjected to another type of image processing.

### <1. 3D Modeling>

First, photogrammetry will be described.

As a method of generating (reconfiguring) a model of a three-dimensional shape of an object (also called a 3D object) having a three-dimensional shape, there is a method called photogrammetry of imaging a 3D object from multiple directions and generating (3D data of) a 3D model on the basis of a plurality of obtained captured images. Note that in the present disclosure, generation of a model of a three-dimensional shape of a 3D object will also be called 3D modeling.

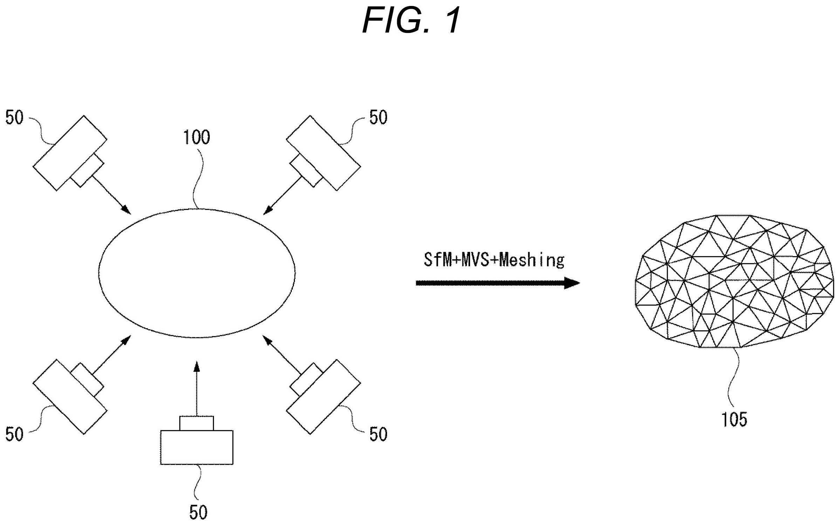

Photogrammetry is a method of reconfiguring a highly accurate three-dimensional model from a plurality of pieces of images captured from various viewpoints using the principle of triangulation. For example, by imaging work using a camera 50 illustrated in Fig. 1, a plurality of captured images obtained by imaging a 3D object 100 from a plurality of viewpoints is obtained. Then, a 3D model 105 is generated by performing processing called structure from motion (SfM) and processing called multi view stereo (MVS) using these captured images and the like, and further performing meshing and texturing as post-processing.

Note that "accuracy" of a 3D model in the present specification can include not only reproducibility of a three-dimensional shape of a target 3D object, that is, exactness, level of detail, and the like of the three-dimensional shape, but also reproducibility (exactness, level of detail, and the like) of texture applied to surfaces of the 3D model.

In SfM, for example, corresponding points are searched between captured images, the position and pose of the camera are derived by epipolar constraint, and the position of each corresponding point in a three-dimensional space is specified by triangulation based on the camera position and pose. In the present disclosure, these points in three-dimensional space will also be called three-dimensional points. That is, three-dimensional points corresponding to each corresponding point are specified by SfM. Then, the entire three-dimensional point group specified as described above is optimized by bundle adjustment.

In MVS, for example, the three-dimensional points are added by performing a denser corresponding point search using the three-dimensional point group derived as described above.

As described above, since global optimization calculation for minimizing errors, that is, bundle adjustment, is performed in photogrammetry, a highly accurate result can be obtained, but a calculation load is large. In addition, since photogrammetry is based on geometric calculation rather than physical measurement, a more accurate model can be restored by using higher resolution images in principle.

Next, real-time 3D modeling will be described.

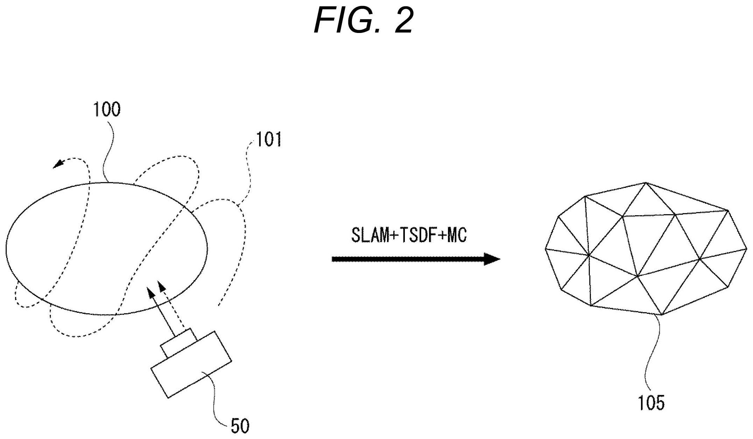

As a 3D modeling method different from the photogrammetry, there is a method called real-time 3D modeling, in which 3D data is generated instantaneously (in real-time) on the basis of information such as captured images, pose information, and depth. In the case of this method, for example, as illustrated in Fig. 2, images of the 3D object 100 are captured while moving a camera 50 around the 3D object 100 as indicated by a dotted line 101. The camera 50 includes not only an image sensor but also a light detection and ranging (Lidar) scanner (time of flight (ToF) module), and obtains captured images and detects depth (distance to a subject).

Miniaturization and functional enhancement of ToF modules have progressed in recent years, and a relatively long-distance depth (for example, about 5 m) can be accurately measured both indoors and outdoors. With this arrangement, it has become easy to experience real-time modeling and capturing at the consumer level.

Moreover, the camera 50 includes an inertial sensor, and can detect inertial information such as acceleration and angular velocity of the camera 50.

In the real-time 3D modeling, pose information indicating a position and pose of the camera 50 is generated by performing three-dimensional pose calculation processing called simultaneous localization and mapping (SLAM). Furthermore, a truncated signed distance function (TSDF) is updated using the pose information and the depth, and the 3D model 105 (mesh and texture) is generated by processing called marching cubes (MC).

In SLAM, for example, the position and pose of the camera 50 are estimated on the basis of a captured image and inertial information (self-position estimation). In the updating of the TSDF, the depth and voxels are associated with each other, and volume is detected. In MC, isosurfaces are calculated using adjacent voxels. With SLAM real-time pose information, it is possible to detect the volume of voxels without using a point cloud by superimposing a plurality of frames of depth (how far light beams have reached) upon one another. Voxel representation allows estimation of a viewpoint (missing viewpoint) that is overshadowed and from which an image needs to be captured. With this arrangement, a perforated structure or a protruding structure of a 3D object can be detected.

In addition, as another 3D modeling method, there is also a method collectively called neural rendering. This is a method in which neural fields are configured on the basis of poses of captured images and the captured images to generate an image from an arbitrary viewpoint or a three-dimensional model, and, for example, neural radiance fields (NeRF) and the like have been proposed.

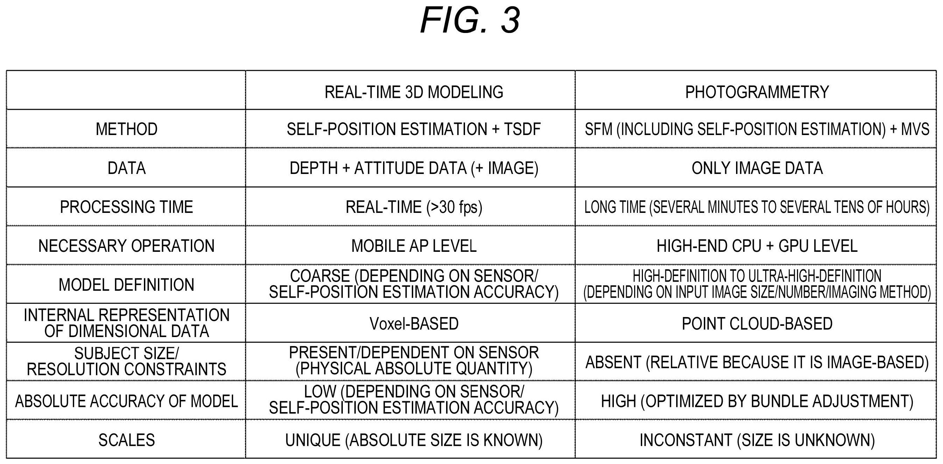

Each of these 3D modeling methods has different characteristics, and no single method excels in all respects. Fig. 3 illustrates comparison between characteristics of photogrammetry and characteristics of real-time 3D modeling. As can be seen from the comparison of methods illustrated in Fig. 3, photogrammetry uses SfM (including self-position estimation) and MVS, whereas real-time 3D modeling uses self-position estimation (SLAM) and the TSDF. Furthermore, as can be seen from comparison of data to be used, photogrammetry uses only image data, whereas real-time 3D modeling uses depth and pose data in addition to image data. Furthermore, as can be seen from comparison of processing time, photogrammetry requires a long time ranging from several minutes to tens of hours, whereas real-time 3D modeling allows near-instantaneous processing such as 30 fps (frames/sec).

Furthermore, as can be seen from comparison of required operational power, photogrammetry requires operational power at a high-end central processing unit (CPU) and graphics processing unit (GPU) level, whereas real-time 3D modeling requires operational power at a mobile application processor (AP) level. Furthermore, as can be seen from comparison of level of detail of models to be generated, photogrammetry results in relatively high level of detail although the level of detail depends on resolution, the number, and an imaging method of captured images and the like, whereas real-time 3D modeling results in relatively low level of detail although the level of detail depends on the depth and self-position estimation accuracy.

Furthermore, with respect to internal representation of three-dimensional data to be generated, photogrammetry is point cloud-based, whereas real-time 3D modeling is voxel-based. Furthermore, photogrammetry has no constraints in terms of subject size and resolution, whereas real-time 3D modeling depends on the sensor. Furthermore, as can be seen from comparison of absolute accuracy of models, photogrammetry results in relatively high absolute accuracy because of the optimization through bundle adjustment, whereas real-time 3D modeling results in relatively low absolute accuracy although the absolute accuracy depends on the sensor and the self-position estimation accuracy. In addition, as can be seen from comparison of scales, photogrammetry has an indeterminate scale (size is unknown), whereas real-time 3D modeling has a unique scale (absolute size is known).

There are such differences in characteristics, for example, between photogrammetry and real-time 3D modeling. That is, it is possible to reduce the amount of work and processing of 3D modeling in a case where real-time 3D modeling is employed compared to a case where photogrammetry or neural rendering is employed. It is, however, possible to generate a more accurate 3D model in a case where photogrammetry or neural rendering is employed than in a case where real-time 3D modeling is employed.

In order to obtain more accurate 3D data, therefore, it is only required to employ photogrammetry or neural rendering. In this case as well, however, it is desirable that the amount of work and processing of 3D modeling be as small as possible. In order to reduce the amount of work and processing of 3D modeling, it is required that a 3D model as accurate as possible be generated while minimizing the number of times of imaging.

For example, in a case where captured images necessary for 3D modeling cannot be obtained, there is a possibility that accuracy of a 3D model to be generated decreases. Conversely, if an excessive number of captured images are obtained in order to avoid a shortage, imaging frequency increases unnecessarily, and the user's amount of work increases accordingly. Furthermore, since 3D modeling is performed using unnecessary captured images in this case, the amount of processing increases unnecessarily.

That is, in order to obtain more accurate 3D data with a smaller amount of work and processing, it is required to capture images of a 3D object at more appropriate positions and poses. In each of the 3D modeling methods described above, however, it has been difficult for an imaging operator to identify appropriate positions and poses for imaging.

For example, since photogrammetry takes time for 3D modeling processing, it is difficult for the imaging operator to instantaneously review a 3D modeling result during imaging. It is therefore difficult for the imaging operator to identify, during imaging, appropriate positions and poses for the imaging. Consequently, for example, there might not be a sufficient number of images captured at appropriate positions and poses, and there is a possibility that accuracy of 3D data obtained through photogrammetry decreases. Furthermore, in a case where imaging is performed excessively and haphazardly at many positions and poses in order to avoid a shortage of images captured at appropriate positions and poses, there is a possibility that not only the user's amount of work increases, but also the number of captured images increases unnecessarily, and there is a possibility that a load (the amount of processing, processing time, and the like) of 3D modeling processing increases unnecessarily.

Therefore, in the imaging device of the present embodiment, 3D modeling is performed twice, and guidance and control regarding imaging for second 3D modeling are performed using first 3D modeling result.

The imaging device performs first 3D modeling by, for example, real-time 3D modeling to generate a first 3D model representing a three-dimensional shape of a 3D object. Then, guidance with respect to the user who is the imaging operator and imaging control for the second 3D modeling, for example, photogrammetry or neural rendering, are performed using information based on the real-time 3D modeling. That is, the imaging device performs guidance by using information according to the first 3D modeling (real-time 3D modeling) such that imaging for second 3D modeling processing can be performed at a more appropriate position and pose. Furthermore, in the case of the present embodiment, it is not necessary for the user to perform a shutter operation, and shutter control, that is, image acquisition processing is automatically performed at an optimal timing. The imaging for the first 3D modeling and the imaging (image acquisition processing) for the second 3D modeling may be performed simultaneously, or the imaging for the first 3D modeling may be performed in advance, and then the imaging for the second 3D modeling (image acquisition processing) may be performed.

### <2. External Appearance Example of Imaging Device>

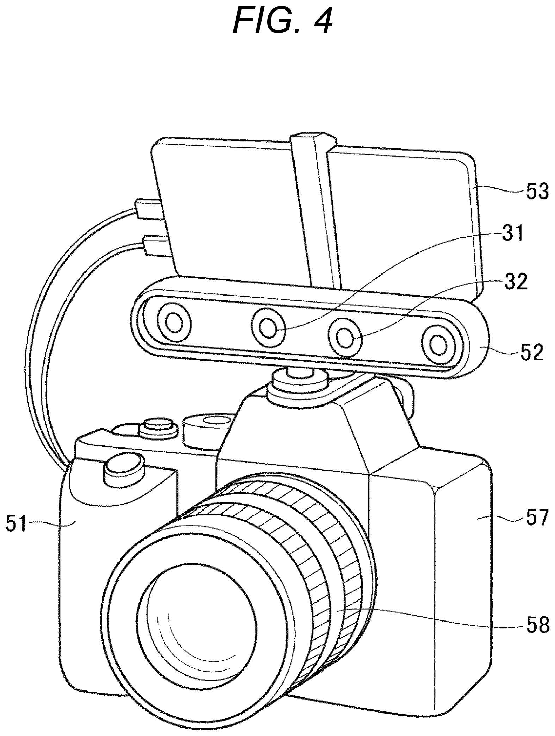

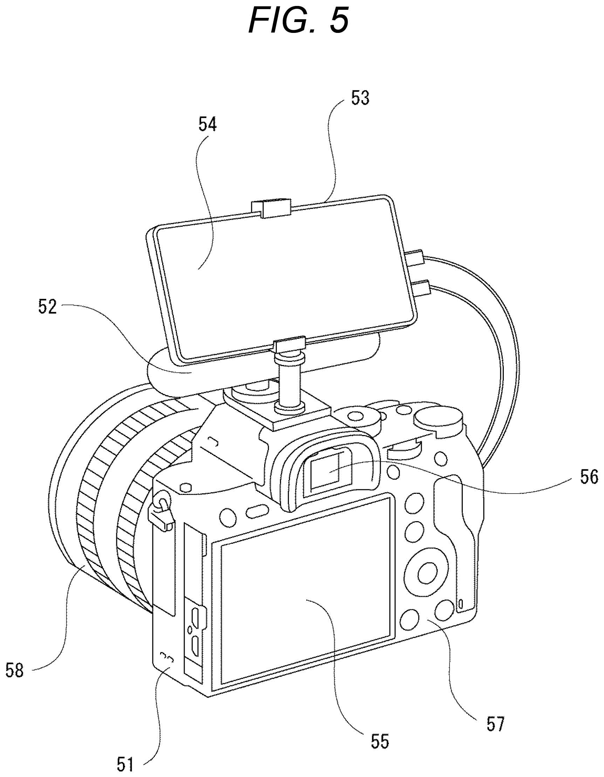

Figs. 4 and 5 illustrate an external appearance example of an imaging device according to an embodiment of the present disclosure.

An imaging device 51 illustrated in Figs. 4 and 5 is a camera in which a lens barrel 58 is attached to a main body 57. The lens barrel 58 may be of an interchangeable lens type or may be a non-detachable lens provided integrally with the main body 57.

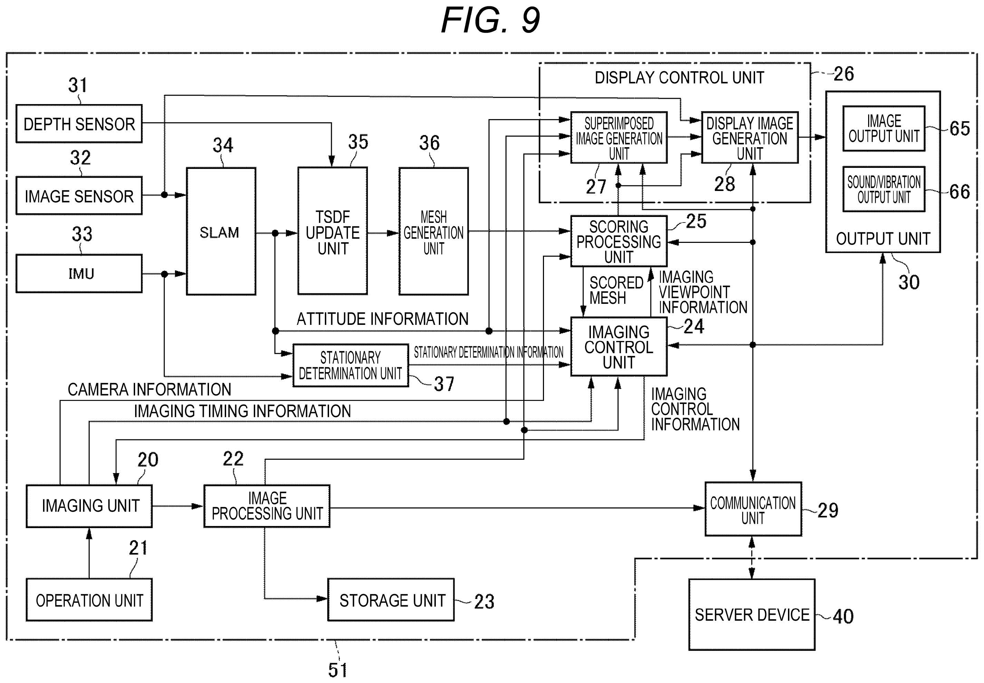

Light incident through the lens barrel 58 is captured by an image sensor disposed in the main body 57, that is, photoelectrically converted, and processed as a captured image. The image sensor here corresponds to an imaging unit 20 (Fig. 9) to be described below.

The main body 57 and the lens barrel 58 are provided with various operators for the user to perform operations, a display 55 that displays a captured image, various icons, menus, and the like, a viewfinder 56, and the like.

A sensor unit 52 is attached to the main body 57. The sensor unit 52 is a unit provided with, for example, a depth sensor 31 configuring a distance measurement unit, an image sensor 32 configuring an imaging unit, an inertial measurement unit (IMU) 33 (Fig. 9) configuring an inertial information detection unit, and the like. According to the sensor unit 52, a captured image is obtained by the image sensor 32, distance information with respect to a subject is obtained by the depth sensor 31, and inertial information (acceleration and angular velocity) of the imaging device 51 is obtained by the IMU 33.

In addition, an interface device 53 is attached to the main body 57. The interface device 53 may be a device dedicated to the imaging device 51, or may be configured to be able to cooperate with the imaging device 51 using an information processing device such as a smartphone, for example. A display 54 of the interface device 53 performs various displays for the user. For example, a captured image (through image) of a subject is displayed on the display 54. In addition, the display 54 also performs display for guidance for the user's imaging work. Further, the display 54 is a touch panel, and can receive a user's operation input.

Note that although a smartphone or the like is used as the interface device 53 in Figs. 4 and 5, the display 55 of the main body 57 may perform display by the interface device 53 and detect operation inputs, and a separate interface device 53 may be omitted.

In addition, an example in which a camera including the main body 57 and the lens barrel 58 as illustrated in the drawing is not used is also conceivable. For example, since an information processing device such as a smartphone often has an imaging function and also often has a distance measuring function and an inertial sensor function, a smartphone, a tablet device, or the like may be used alone as the imaging device 51 in the present embodiment.

In addition, the depth sensor 31, the image sensor 32, the IMU 33, and the like provided in the sensor unit 52 may be built in the main body 57 or may be built in the interface device 53. Furthermore, in a case where the information processing device such as a smartphone is used as the imaging device 51, the depth sensor 31, the image sensor 32, and the IMU 33 may be built in the information processing device.

In addition, a display device for displaying images and the like may be an external device, instead. For example, display data may be transmitted from the imaging device 51 by short-distance wireless communication, wired communication, or the like, and displayed on a monitor display device, a head-mounted display, a display of another information processing device, or the like.

That is, the imaging device 51 according to the embodiment is a device capable of capturing images in any form, and only needs to have a control function of executing an interface based on image display or the like on an integrated or separate screen or the like for the user.

### <3. Problem of Imaging Using Monopod or Tripod>

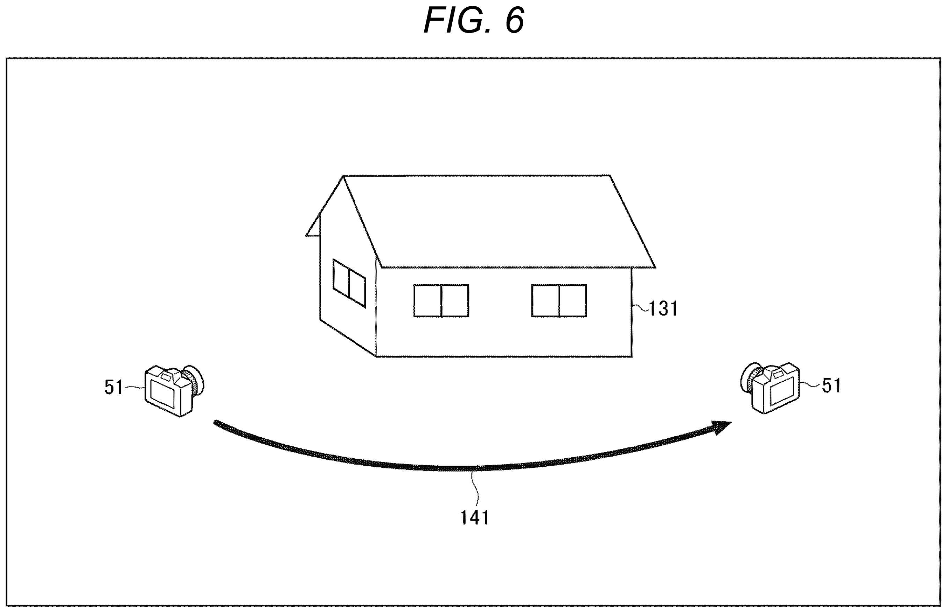

Fig. 6 illustrates a flow of photogrammetry imaging by the imaging device 51.

The user images a 3D object 131 using the imaging device 51 while moving around the 3D object (for example, a building) 131 as a subject of a 3D modeling target. The imaging device 51 determines an imaging timing according to the movement of the user, and executes imaging as image acquisition processing at an appropriate imaging timing. The appropriate imaging timing is determined, for example, by calculating a distance such that the captured image overlaps the immediately previously captured image with an appropriate overlap ratio, and defining a position reached after moving the calculated distance. The imaging device 51 automatically executes imaging without a user's shutter operation at the appropriate imaging timing according to the movement of the user.

In the imaging of the 3D model, it is common to narrow a diaphragm and perform imaging in order to gain a depth of field. However, narrowing the diaphragm inevitably reduces the amount of light for imaging with appropriate exposure, so it is necessary to increase sensitivity or lengthen a shutter speed. Since increasing the sensitivity leads to degradation of image quality due to noise, a user generally lengthens a shutter speed. In a case of using a longer shutter speed, use of a monopod or a tripod is considered in order to prevent an image from shaking due to minute movement of a camera.

However, there is a problem that, in imaging using a monopod or a tripod, it is difficult to use at the time of 3D model automatic imaging of performing automatic imaging according to movement as described above. This is because, at the time of automatic imaging, the user does not release the shutter, but rather the image is captured at the timing on the device side, so the user does not know the timing of installing a monopod or a tripod. Simply installing a monopod or a tripod and then performing automatic imaging would require the user to determine the position of the camera, which would eliminate the utility of the automatic imaging.

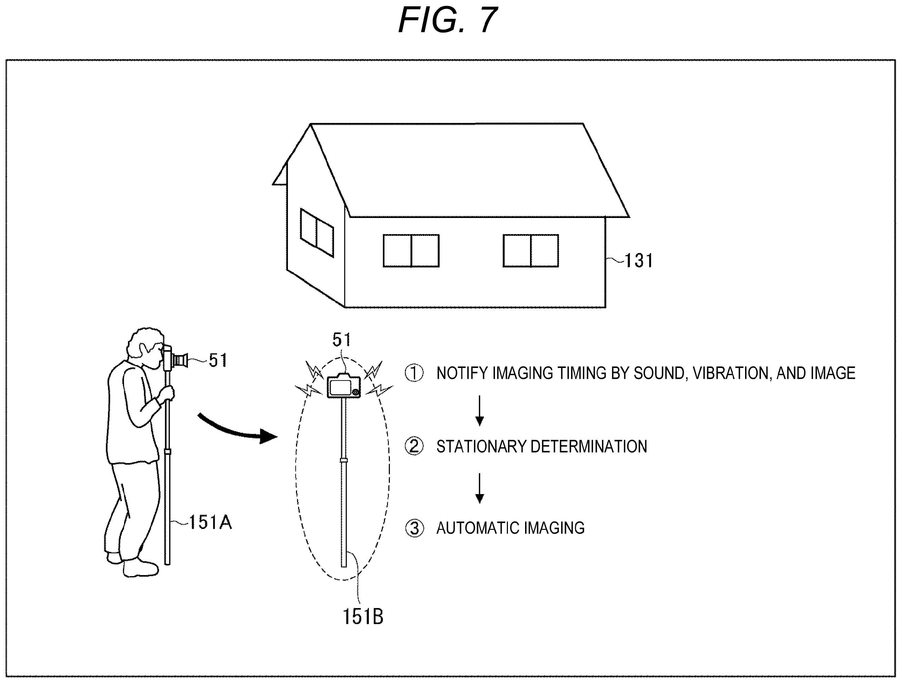

Therefore, the imaging device 51 includes a user interface that enables imaging using a monopod or a tripod while taking advantage of automatic imaging. Specifically, as illustrated in Fig. 7, the imaging device 51 notifies the user of a next imaging timing by sound, vibration, or an image at a point in time when the user moves from a camera position 151A at which the imaging has been performed immediately previously to a camera position 151B (a position of the imaging device 51) at which the imaging is to be performed next. The user stops moving in response to the notification of the imaging timing and makes the camera stationary. The imaging device 51 determines whether or not the imaging device 51 is stationary from information of the IMU 33 or the like. Then, the imaging device 51 automatically executes imaging at a timing when it is determined that it is stationary. In this manner, the imaging device 51 informs the user of the imaging timing through sound, vibration, or a visual feedback, thereby urging the user to perform a stationary operation. As a result, since imaging is executed in a state where the user is reliably stationary, high-quality imaging with little blurring can be performed. Since the user can perform imaging with a good tempo relatively easily only by moving the imaging device 51, it is possible to perform imaging of the subject of the 3D modeling target without omission.

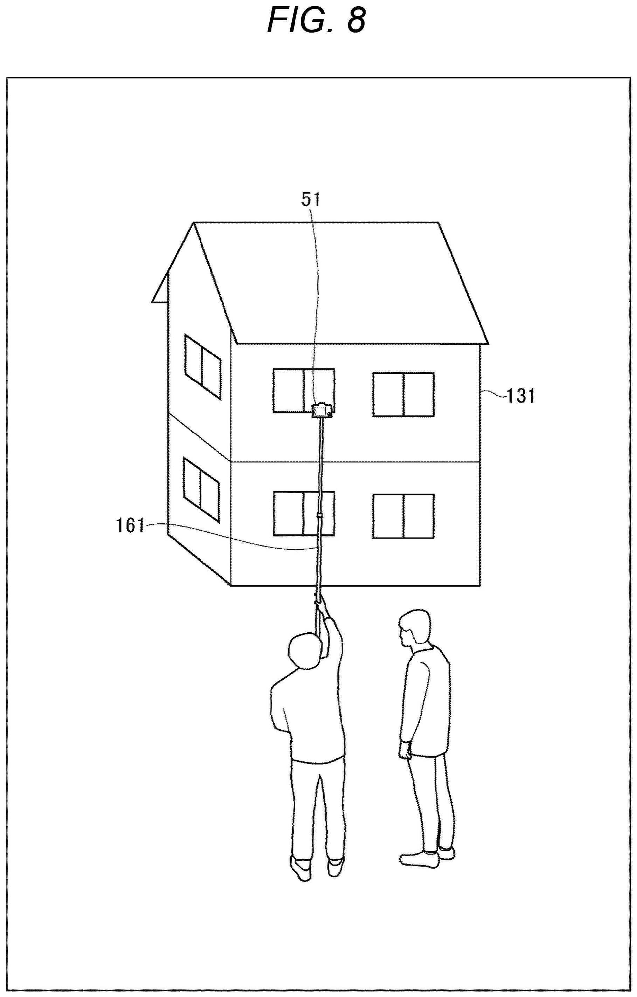

In the imaging of the 3D model, imaging at various angles is important, and thus, in many cases, imaging is performed in a place where the hand cannot reach. As in the example of Fig. 8, in the case of imaging using a pole 161 for high place imaging, a person supporting the pole 161 cannot perform a shutter operation, and thus another person (person on the right side) performs imaging by operating with a remote controller or the like. However, by the function of the imaging device 51 described above, specifically, the function of notifying the user of the imaging timing by the vibration or the like, determining whether or not the user is stationary, and then automatically executing imaging (hereinafter, called a timing-presentation stationary-determination automatic imaging function), it is possible to automatically execute imaging with a good tempo even by one person by making the person supporting the pole 161 stationary at the place where the feedback has been made.

In a case where imaging is performed while moving, there is a problem that it is more difficult to estimate the movement of the camera, and the amount to be corrected for camera shake correction varies depending on the distance to the subject. In particular, in the imaging of the 3D model, since the number of images to be captured is large, and continuous imaging is performed in order to perform imaging with a good tempo, there is a case where imaging is performed without the device being completely stationary. In such a case, the camera shake correction effect is weakened due to the above reason. When the image with the camera shake is mixed, the accuracy of the 3D model reconfiguration is lowered. Therefore, it is desirable to exclude the image with the camera shake. However, it takes a very long time to remove only the image with the camera shake from several hundred to several thousand pieces of captured images captured continuously, and is therefore, such a situation is desirably avoided as much as possible. According to the timing-presentation stationary-determination automatic imaging function of the imaging device 51 described above, imaging is executed in a state where the user is reliably stationary, so that high-quality imaging with little blurring can be performed, and imaging that is easy to perform the camera shake correction by a general algorithm can be obtained.

### <4. Configuration Example of Imaging Device>

Fig. 9 is a block diagram illustrating a configuration example of the imaging device 51.

Note that, in the present embodiment, not the imaging device 51 but the server device 40 is assumed to perform, for example, photogrammetry as the second 3D modeling, and thus the server device 40 is also illustrated. The server device 40 includes, for example, a cloud server, and the imaging device 51 is connected to the server device 40 via a predetermined network such as the Internet or a LAN.

Each unit of the imaging device 51 is provided, for example, in any of the sensor unit 52, the main body 57, and the interface device 53 in the examples of Figs. 4 and 5, but it is only required to provide them at appropriate portions in the imaging device 51 as a whole. Furthermore, the imaging device 51 may include a device or a processing unit not illustrated as a block in Fig. 9, or there may be a data flow or processing not illustrated as an arrow or the like.

The imaging device 51 includes, for example, the depth sensor 31, the image sensor 32, the IMU 33, an SLAM 34, a TSDF update unit 35, a mesh generation unit 36, and the like as a configuration for performing real-time 3D modeling as first 3D modeling.

Furthermore, the imaging device 51 includes the imaging unit 20, an operation unit 21, an image processing unit 22, a storage unit 23, a communication unit 29, a stationary determination unit 37, and the like as a configuration for performing image acquisition processing for second 3D modeling.

Furthermore, the imaging device 51 includes an imaging control unit 24, a scoring processing unit 25, a display control unit 26, an output unit 30, and the like as a configuration for various types of control and guidance with respect to the user. The display control unit 26 includes a superimposed image generation unit 27 and a display image generation unit 28. The output unit 30 includes an image output unit 65 and a sound/vibration output unit 66.

In such an imaging device 51, the depth sensor 31 includes a Lidar sensor (ToF module) or the like, detects depth information indicating a depth to a subject, and supplies the depth information to the TSDF update unit 35. The image sensor 32 images a subject to generate captured images, and supplies the generated captured images to the display image generation unit 28 and the SLAM 34. The captured images by the image sensor 32 are used for first real-time 3D modeling. The IMU 33 detects inertial information (acceleration and angular velocity) of the imaging device 51 and supplies the inertial information to the SLAM 34 and the stationary determination unit 37.

The SLAM 34 (self-position estimation unit) performs self-position estimation on the basis of the supplied captured images and inertial information, and generates pose information indicating a position and pose of the imaging device 51. The SLAM 34 supplies the generated pose information to the TSDF update unit 35, the stationary determination unit 37, the imaging control unit 24, and the display control unit 26.

The TSDF update unit 35 updates TSDF on the basis of the pose information of the imaging device 51 and the depth information detected by the depth sensor 31, and supplies the updated TSDF to the mesh generation unit 36. The mesh generation unit 36 generates a mesh and a texture by using the updated TSDF. The mesh generation unit 36 supplies the data of the mesh and the texture to the scoring processing unit 25 as 3D data (first 3D data) of a first 3D model (first three-dimensional shape information).

The stationary determination unit 37 is supplied with the inertial information of the imaging device 51 detected by the IMU 33, and is supplied with the pose information that is a self-position estimation result by the SLAM 34. The stationary determination unit 37 determines whether or not the imaging device 51 possessed by the user is stationary by using at least one or both of the inertial information from the IMU 33 and the pose information from the SLAM 34. For example, in a case where the speed of the imaging device 51 is determined to be zero (zero within a predetermined threshold) on the basis of the inertial information, the stationary determination unit 37 determines that the imaging device 51 is stationary. Furthermore, for example, in a case where the change in the position and orientation of the imaging device 51 is determined to be zero (zero within a predetermined threshold) on the basis of the pose information, the stationary determination unit 37 determines that the imaging device 51 is stationary. The stationary determination unit 37 supplies stationary determination information indicating whether or not it is stationary to the imaging control unit 24. Note that the stationary determination unit 37 may be incorporated as a part of the imaging control unit 24, and the imaging control unit 24 may determine whether or not the imaging device 51 is stationary on the basis of the inertial information from the IMU 33 or the pose information from the SLAM 34.

The scoring processing unit 25 performs scoring processing on the basis of the supplied 3D data of the first 3D model and imaging viewpoint information supplied from the imaging control unit 24, that is, information indicating the position and pose at which the imaging (image acquisition processing) for the second 3D modeling has been performed. This scoring processing is processing of evaluating the accuracy of the second 3D model generated by the server device 40 using the images captured by the imaging unit 20 so far, by using the three-dimensional shape information by the first 3D model, and generating a scoring result (score).

For example, the scoring processing unit 25 generates a scoring result for each local part of first three-dimensional shape information on the basis of the first three-dimensional shape information and the position and pose of the imaging of the imaging unit 20 performed so far. For example, the scoring processing unit 25 may generate a scoring result for each polygon of a mesh. The scoring processing unit 25 may acquire camera information related to the imaging unit 20 and generate a scoring result on the basis of the camera information. The scoring processing unit 25 supplies the scoring results to the imaging control unit 24 and the superimposed image generation unit 27.

The imaging control unit 24 performs imaging control processing as the image acquisition processing by the imaging unit 20. For example, the imaging control unit 24 sets a portion (hereinafter, called a recommended imaging position) of a 3D object that is a subject, where image acquisition processing is to be performed on the basis of the first three-dimensional shape information. In order to execute 3D modeling by photogrammetry with a certain quality, it is necessary to perform imaging directly with respect to an imaging plane of a subject from a certain distance. Furthermore, it is necessary to change an imaging interval depending on the sizes of the front and rear common visual fields due to unevenness of the surface. Therefore, the imaging control unit 24 sets recommended imaging positions with respect to the 3D object such that captured images can be obtained in a state of overlapping each other with an appropriate overlap ratio in accordance with a shape, unevenness, and the like of each portion of the 3D object. The appropriate overlap ratio is set to, for example, about 25% to 75%. The amount of information increases as the overlap ratio increases. The imaging control unit 24 may use the scoring result to set appropriate recommended imaging positions. For example, the recommended imaging positions are densely set at a portion having a low evaluation.

In this manner, the imaging control unit 24 sets a plurality of recommended imaging positions (points at which the image acquisition processing is to be executed) that are appropriate imaging positions for the 3D object that is the subject, but the user cannot recognize where to image only on the basis of the setting. Therefore, in a case where it is determined that the user has moved to the appropriate imaging position on the basis of the pose information from the SLAM 34, in other words, in a case where it is determined that the imaging timing has arrived, the imaging control unit 24 supplies feedback control information for outputting sound or vibration to the sound/vibration output unit 66, and outputs sound or vibration indicating that the appropriate imaging timing has arrived. Alternatively, the imaging control unit 24 supplies display control information for performing predetermined display to the display control unit 26, and causes the display control unit 26 to generate an image (superimposed image) indicating that the appropriate imaging timing has arrived. The sound, vibration, and image indicating that the appropriate imaging timing has arrived may be continuously output in a predetermined pattern from before the imaging timing and as approaching the imaging timing.

In a case where the user moves to the appropriate imaging position and it is determined that it is the imaging timing, the imaging control unit 24 determines whether or not the imaging device 51 is stationary on the basis of the stationary determination information from the stationary determination unit 37. Then, in a case where it is determined that the imaging device 51 is stationary, the imaging control unit 24 transmits imaging control information for controlling the shutter to the imaging unit 20, and causes the imaging unit 20 to execute imaging as image acquisition processing. Furthermore, the imaging control unit 24 supplies imaging viewpoint information indicating the position and pose of the imaging executed by the imaging unit 20 to the scoring processing unit 25.

The imaging unit 20 includes an image sensor and captures images of the subject to generate captured images. In other words, the imaging unit 20 captures images as image acquisition processing through shutter control by the imaging control unit 24, generates captured images for the second 3D modeling, and supplies the captured images to the image processing unit 22.

Furthermore, the imaging unit 20 may supply, for example, internal parameters, external parameters, angle of view information, and the like of the imaging unit 20 to the scoring processing unit 25 as camera information. Furthermore, the imaging unit 20 may supply, to the imaging control unit 24, imaging timing information indicating an imaging timing not based on the shutter control by the imaging control unit 24, such as the user's shutter operation using the operation unit 21.

The operation unit 21 is an operator operable by the user, and includes a shutter operator, a zoom operator, a focus operator, and other operators for various camera operations. The imaging unit 20 may perform imaging in accordance with a shutter operation instruction from the user supplied from the operation unit 21 to generate a captured image.

The image processing unit 22 performs predetermined image processing on the captured images for the second 3D modeling generated by the imaging unit 20. The content of this image processing is arbitrary. The image processing unit 22 performs signal processing such as color separation processing, color conversion processing, defect correction, noise reduction, AWB, and gamma correction on the captured images, for example. Furthermore, the image processing unit 22 performs encoding processing on the captured images. The encoded data obtained by performing the encoding processing on the captured images is supplied to the communication unit 29 and the storage unit 23.

The storage unit 23 records the encoded data supplied from the image processing unit 22 in a recording medium. The communication unit 29 transmits the encoded data supplied from the image processing unit 22 to another information processing device (for example, a server or the like). For example, the communication unit 29 sequentially uploads encoded data obtained by encoding the captured images for the second 3D modeling to the server device 40.

### <Configuration Example of Server Device>

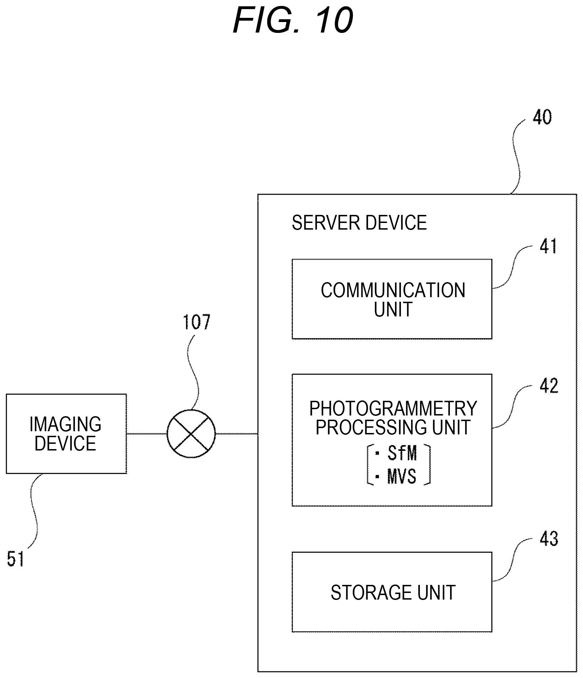

Fig. 10 illustrates a configuration example of the server device 40 that performs data communication with the imaging device 51 via a network 107. The encoded data of the captured images obtained by performing imaging as the image acquisition processing by the imaging unit 20 is uploaded to the server device 40, and the second 3D modeling is performed by the server device 40.

The server device 40 includes a communication unit 41, a photogrammetry processing unit 42, and a storage unit 43.

The communication unit 41 sequentially receives the encoded data of the captured images uploaded from the imaging device 51. In addition, the communication unit 41 transmits information regarding a 3D model generated by the photogrammetry processing unit 42 to the imaging device 51.

The storage unit 43 stores the encoded data of the captured images uploaded from the imaging device 51, stores the 3D data generated by the photogrammetry processing unit 42, and the like.

The photogrammetry processing unit 42 decodes the uploaded encoded data and executes 3D modeling on the decoded captured images. For example, the photogrammetry processing unit 42 generates a second 3D model (second three-dimensional shape information) by performing processing such as SfM or MVS on the basis of captured images generated by the imaging unit 20.

In the SfM processing, for example, the photogrammetry processing unit 42 searches for corresponding points between captured images, derives a position and pose of the imaging device 51 by epipolar constraint, specifies positions of respective corresponding points in a three-dimensional space by triangulation based on the position and pose of the imaging device 51, and optimizes the entire specified three-dimensional point group by bundle adjustment. In the MVS processing, for example, the photogrammetry processing unit 42 further performs dense corresponding point search using the three-dimensional point group, adds three-dimensional points, and further performs meshing and texturing as post-processing to generate a second 3D model.

The photogrammetry processing unit 42 encodes the data (3D data) of the 3D model generated in this manner, supplies the encoded data to the storage unit 43, and records the encoded data on a recording medium. Furthermore, the photogrammetry processing unit 42 supplies the encoded data of the second 3D model to the communication unit 41 and causes the communication unit 41 to transmit the encoded data to the imaging device 51.

Note that after a required number of captured images is obtained, the photogrammetry processing unit 42 performs photogrammetry processing to generate a 3D model, but performs simple 3D modeling to generate a 3D model as a preview image while the imaging device 51 is executing the imaging work. For example, the server device 40 performs 3D modeling for preview each time a captured image is uploaded from the imaging device 51 thereby generating and updating a 3D model. The 3D model at each point in time is transmitted to the imaging device 51.

Note that although the server device 40 includes the photogrammetry processing unit 42, the server device 40 may include a neural rendering processing unit and generate the second 3D model through neural rendering.

Returning to Fig. 9, in the imaging device 51, the communication unit 29 receives the 3D model for preview during imaging. The received 3D model for preview is supplied to the scoring processing unit 25 and the display control unit 26.

The display control unit 26 controls display of the captured image and display including guidance regarding the user's imaging work. The superimposed image generation unit 27 generates an image to be superimposed on the captured image of the subject, for example, an image indicating a recommended imaging position, an imaging timing (shutter timing), and the like as guidance, and supplies the generated image to the display image generation unit 28 as a superimposed image.

The display image generation unit 28 generates a display image by combining the superimposed image supplied from the superimposed image generation unit 27 so as to be superimposed on the captured image supplied from the image sensor 32. Furthermore, the display image generation unit 28 can include a 3D model from the server device 40 or thumbnail data thereof in the display image.

The image output unit 65 of the output unit 30 includes, for example, display devices as the displays 54 and 55. The image output unit 65 displays a captured image of the subject and images for various guidance purposes under the control of the display control unit 26. The sound/vibration output unit 66 of the output unit 30 includes, for example, a vibration element such as a piezoelectric element actuator, a piezoelectric actuator, a linear resonant actuator (LRA), a voice coil motor, or an eccentric motor, and performs guidance with respect to the user by generating vibration at a predetermined timing on the basis of the control of the imaging control unit 24. Furthermore, the sound/vibration output unit 66 includes, for example, a speaker, and performs guidance with respect to the user by generating sound (including voice) at a predetermined timing on the basis of the control of the imaging control unit 24.

The imaging device 51 having such a configuration determines that the user has moved to the appropriate imaging position, in other words, that the appropriate imaging timing has arrived, and notifies the user. In a case where the imaging device 51 is stationary, the imaging device 51 executes imaging as image acquisition processing, and enables 3D modeling to be executed on the server device 40 using the captured image. In particular, the imaging device 51 outputs, as sound, vibration, or an image, that the appropriate imaging timing has arrived, in other words, that the imaging device is at the appropriate imaging position where it should remain stationary. With this arrangement, even in a case where the user performs imaging using a monopod or a tripod, high-quality imaging with little blurring can be performed. By using the imaging device 51, therefore, it is possible to generate more accurate 3D data while suppressing an increase in the load of 3D modeling.

Note that although the server device 40 performs the second 3D modeling in the above example, a function equivalent to, for example, that of the photogrammetry processing unit 42 may be provided inside the imaging device 51, and the second 3D modeling may be executed, instead.

### <Configuration Example of Information Processing Device>

Here, an information processing device that can be configured as the imaging device 51 or the server device 40 will be described. For example, a portable information processing device such as a smartphone or a tablet terminal can be used as the imaging device 51. The server device 40 is also implemented as an information processing device.

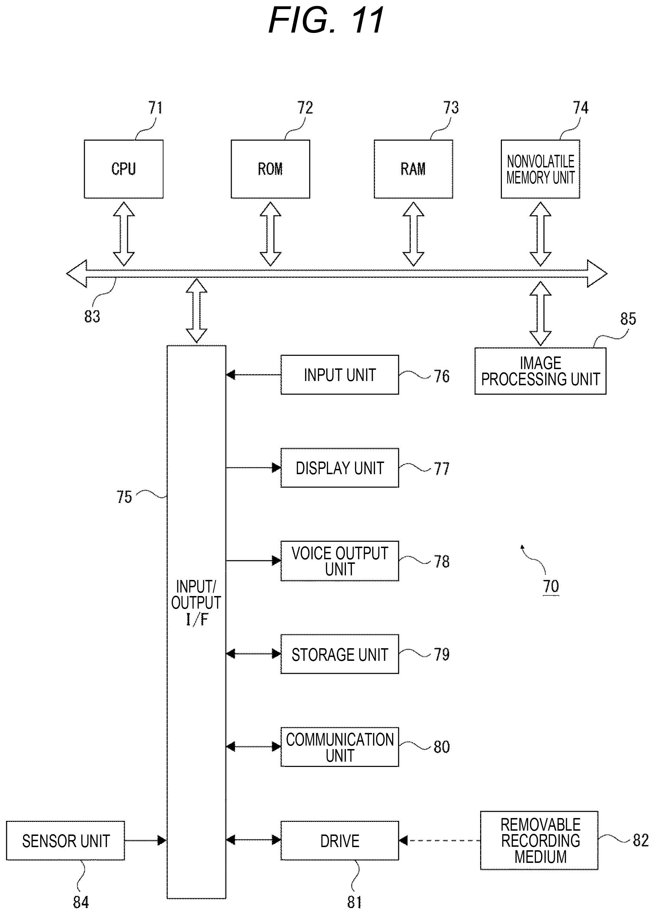

Fig. 11 is a block diagram illustrating a configuration example of an information processing device.

An information processing device 70 in Fig. 11 is a device, such as a computer device, capable of performing information processing, particularly image processing. Specifically, a personal computer, a workstation, a portable terminal device such as a smartphone or a tablet, a video editing device, or the like is assumed as the information processing device 70. Alternatively, the information processing device 70 may be a computer device configured as a server device or an arithmetic device in cloud computing.

A central processing unit (CPU) 71 of the information processing device 70 illustrated in Fig. 11 executes various types of processing in accordance with a program stored in a nonvolatile memory unit 74 such as a read only memory (ROM) 72 or, for example, an electrically erasable programmable read-only memory (EEP-ROM), or a program loaded from the storage unit 79 to a random access memory (RAM) 73. Furthermore, the RAM 73 also stores, as appropriate, data and the like necessary for the CPU 71 to execute the various types of processing.

An image processing unit 85 is configured as a processor that performs various types of video processing. For example, the image processing unit 85 is a processor capable of performing any one or more of 3D modeling processing, rendering, database processing, image processing on captured images including color/luminance adjusting processing and color conversion processing, encoding processing, decoding processing, image editing processing, image analysis/detection processing, and the like.

The image processing unit 85 can be implemented as, for example, a CPU separate from the CPU 71, a graphics processing unit (GPU), general-purpose computing on graphics processing units (GPGPU), an artificial intelligence (AI) processor, or the like. Note that the image processing unit 85 may be provided as a function in the CPU 71.

The CPU 71, the ROM 72, the RAM 73, the nonvolatile memory unit 74, and the image processing unit 85 are connected to one another via a bus 83. Furthermore, an input/output interface 75 is also connected to the bus 83.

An input unit 76 including an operator or an operation device is connected to the input/output interface 75. For example, as the input unit 76, various types of operators and operation devices such as a keyboard, a mouse, keys, a trackball, a dial, a touch panel, a touch pad, and a remote controller are assumed. A user operation is detected by the input unit 76, and a signal corresponding to the input operation is interpreted by the CPU 71. A microphone is also assumed as the input unit 76. It is also possible to input voices uttered by the user as operation information.

Furthermore, a display unit 77 including a liquid crystal display (LCD), an organic electro-luminescence (EL) panel, or the like, and a voice output unit 78 including a speaker or the like are integrally or separately connected to the input/output interface 75. The display unit 77 performs various types of displays. The display unit 77 is implemented as, for example, a display device provided in a housing of the information processing device 70, a separate display device connected to the information processing device 70, or the like. The display unit 77 performs display of various images, operation menus, icons, messages, and the like, that is, display as a graphical user interface (GUI), on a display screen on the basis of instructions from the CPU 71.

The storage unit 79 including a hard disk drive (HDD), a solid state drive (SSD), and the like, or a communication unit 80 may be connected to the input/output interface 75.

The storage unit 79 can store various types of data and programs. A database can be configured in the storage unit 79.

The communication unit 80 performs communication processing via a transmission path such as the Internet, wired/wireless communication with various devices including an external DB, an editing device, and an information processing device, and communication based bus communication or the like.

Furthermore, a drive 81 is also connected to the input/output interface 75 as necessary, and a removable recording medium 82 such as a magnetic disk, an optical disc, a magneto-optical disk, or a semiconductor memory is appropriately mounted thereon. The drive 81 enables reading video data, various types of computer programs, and the like from the removable recording medium 82. The read data is stored in the storage unit 79, and videos and voices included in the data are output from the display unit 77 and the voice output unit 78. In addition, the computer programs and the like read from the removable recording medium 82 are installed in the storage unit 79 as necessary.

In the case of the information processing device 70 used as the imaging device 51, the information processing device 70 has a configuration including a sensor unit 84. The sensor unit 84 indicates a sensor configuration necessary for the depth sensor 31, the image sensor 32, the IMU 33, and the imaging unit 20 described in Fig. 9. For example, the sensor unit 84 includes a Lidar sensor (ToF sensor), a plurality of image sensors, an angular velocity sensor, an acceleration sensor, and the like.

In the information processing device 70, for example, software for the processing in the present embodiment can be installed through network communication by the communication unit 80 or the removable recording medium 82. Alternatively, the software may be stored in advance in the ROM 72, the storage unit 79, or the like.

### <5. Processing Flow of Timing-Presentation Stationary-Determination Automatic Imaging Processing>

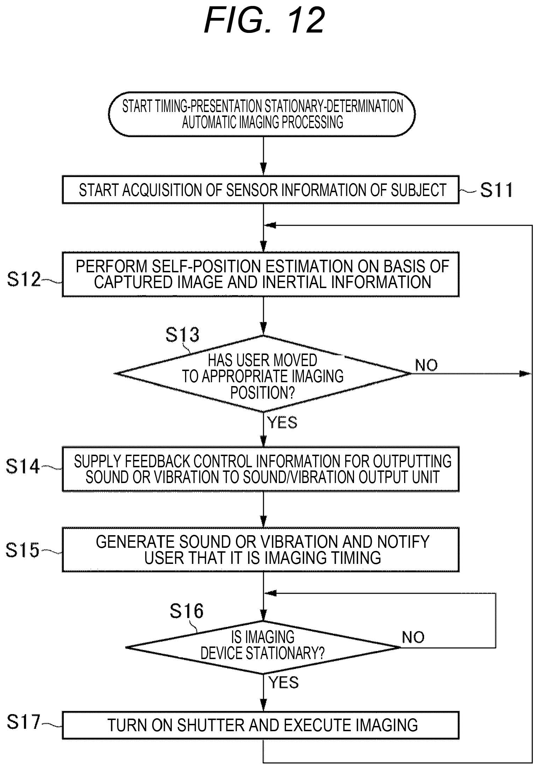

Next, processing (timing-presentation stationary-determination automatic imaging processing) in a case where the imaging device 51 executes a timing-presentation stationary-determination automatic imaging function will be described with reference to a flowchart of Fig. 12. This processing starts, for example, when the operation to start imaging is performed in the imaging device 51.

First, in step S11, each sensor of the sensor unit 52 starts acquisition of sensor information and outputs the acquired sensor information to the subsequent stage. Specifically, the depth sensor 31 acquires distance information with respect to the subject as sensor information, and supplies it to the TSDF update unit 35. The image sensor 32 acquires captured images of a subject as sensor information, and supplies them to the SLAM 34 and the display image generation unit 28. The IMU 33 acquires inertial information of the imaging device 51 as sensor information and supplies it to the SLAM 34 and the stationary determination unit 37. Thereafter, the acquisition of the sensor information and the output to the subsequent stage are continuously executed until the timing-presentation stationary-determination automatic imaging processing is ended.

In step S12, the SLAM 34 performs self-position estimation on the basis of the captured images supplied from the image sensor 32 and the inertial information supplied from the IMU 33, and generates pose information indicating a position and pose of the imaging device 51. The SLAM 34 supplies the generated pose information to the imaging control unit 24, the TSDF update unit 35, the stationary determination unit 37, and the like.

In step S13, the imaging control unit 24 determines whether or not the user has moved to the appropriate imaging position, in other words, whether or not the imaging timing has arrived, on the basis of the pose information from the SLAM 34. The imaging control unit 24 determines whether or not the user has moved from the immediately previous imaging position to the appropriate imaging position on the basis of a preset level of detail of the 3D model to be generated, an interval between imaging positions at which the captured images have an appropriate overlap ratio, an orientation (facing degree) with respect to the subject, and the like. In a case where the processing is the first processing in step S13, that is, in a case where imaging has not been performed even once after the start of imaging of the 3D modeling and the immediately previous imaging position does not exist, it is determined whether or not the imaging position is the appropriate imaging position on the basis of the distance to the subject, the imaging direction (the direction of the camera), and the like.

In a case where it is determined in step S14 that the user has not yet moved to the appropriate imaging position, the processing returns to step S12, and the processes of steps S12 and S13 are repeated. The processes of steps S12 and S13 are repeatedly executed at predetermined intervals, for example, for each frame at a frame rate of 30 fps.

Then, in a case where it is determined in step S13 that the user has moved to the appropriate imaging position, the processing proceeds to step S14, and the imaging control unit 24 supplies feedback control information for outputting sound or vibration to the sound/vibration output unit 66.

In step S15, the sound/vibration output unit 66 acquires the feedback control information, generates (outputs) sound or vibration, and notifies the user that it is the imaging timing. In other words, the imaging device 51 instructs the user to make the imaging device 51 stationary by sound or vibration.

In step S16, the stationary determination unit 37 determines whether or not the imaging device 51 is stationary on the basis of the inertial information from the IMU 33 or the pose information from the SLAM 34, and supplies stationary determination information indicating whether or not it is stationary to the imaging control unit 24. The processing of step S16 is repeated until it is determined that the imaging device 51 is stationary, and in a case where it is determined that the imaging device 51 is stationary, the processing proceeds to step S17.

In step S17, the imaging control unit 24 transmits imaging control information for turning on the shutter to the imaging unit 20, and causes the imaging unit 20 to execute imaging as image acquisition processing. The imaging unit 20 acquires the imaging control information from the imaging control unit 24, and captures images as image acquisition processing.

After step S17, the processing returns to step S12, and the processes of steps S12 to S17 described above are repeated. That is, a series of processes of determining whether or not the user has moved to the appropriate imaging position, outputting sound or vibration in a case where it is determined that the user has moved to the appropriate imaging position, and executing imaging at a point in time when the user makes the imaging device 51 stationary is repeated.

The timing-presentation stationary-determination automatic imaging processing is executed as described above.

Note that although detailed description is omitted, processing of the first 3D modeling, processing of generating a display image on the basis of a captured image and displaying the display image on the display 54, and the like are also executed at the same time, separately from the timing-presentation stationary-determination automatic imaging processing. For example, the TSDF update unit 35 updates TSDF on the basis of the pose information of the imaging device 51 supplied from the SLAM 34 and the depth information detected by the depth sensor 31, and supplies the updated TSDF to the mesh generation unit 36. The mesh generation unit 36 generates a mesh and a texture using the updated TSDF, and supplies data of the mesh and the texture to the scoring processing unit 25 as 3D data (first 3D data) of a first 3D model (first three-dimensional shape information). The scoring processing unit 25 performs scoring processing on the basis of the supplied 3D data of the first 3D model and imaging viewpoint information supplied from the imaging control unit 24, that is, information indicating the position and pose at which the imaging (image acquisition processing) for the second 3D modeling has been performed. The display control unit 26 generates a display image by combining a superimposed image including guidance regarding the user's imaging work so as to be superimposed on the captured image supplied from the image sensor 32. The image output unit 65 of the output unit 30 displays the display image on the display 54.

### <6. Modification of Imaging Timing Presentation>

In the timing-presentation stationary-determination automatic imaging processing described in the flowchart of Fig. 12, in a case where the user has moved to the appropriate imaging position, control is performed to notify the user, by sound or vibration, to make the imaging device 51 stationary, and to notify the user that it is the imaging timing. However, it is difficult for the user who has received the notification to suddenly make the device stationary.

Therefore, the imaging device 51 may notify the user that the imaging position is close by generating sound or vibration in a predetermined pattern such that the sound or vibration gradually changes as approaching the appropriate imaging position, thereby causing the user to prepare to bring the imaging device 51 to a stationary state so as to slow down the moving speed.

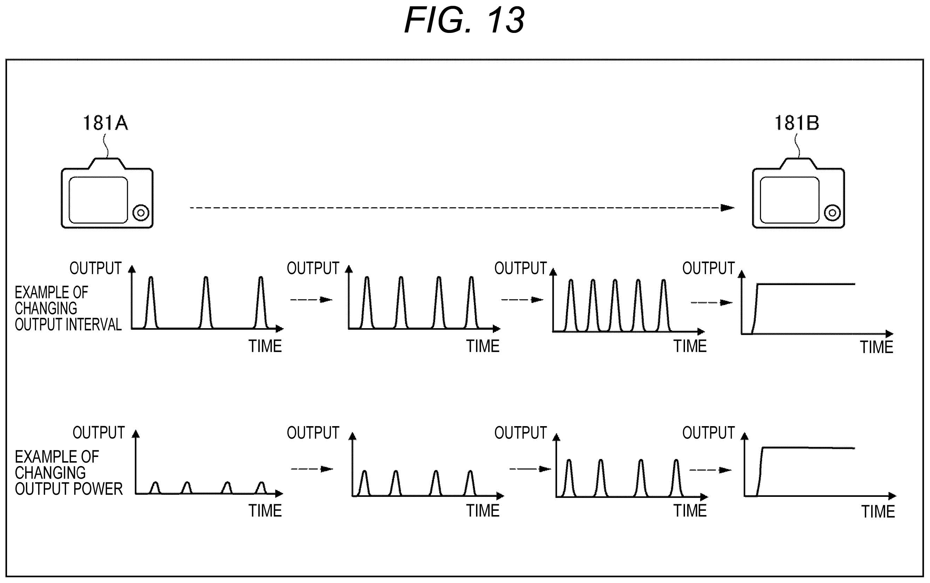

Fig. 13 is a diagram for describing an example of changing a pattern of sound or vibration as approaching the imaging position.

In Fig. 13, it is assumed that the user is moving from a previous imaging position 181A to a next appropriate imaging position 181B.

The example in the upper part of Fig. 13 indicates, for example, an example in which an output interval of the sound is controlled to be shorter and output as approaching the next imaging position 181B. The graph in the upper part of Fig. 13 indicates the timing at which the sound is output as a waveform. As the position of the imaging device 51 approaches the next imaging position 181B, an output interval of the sound indicated by the time on the horizontal axis becomes shorter, and continuous sound is output at the imaging position 181B.

The example in the lower part of Fig. 13 indicates, for example, an example in which an output power of the sound is controlled to increase and output as approaching the next imaging position 181B. The graph in the lower part of Fig. 13 indicates the timing at which the sound is output as a waveform, and the height of the vertical axis indicates a magnitude of the output. As the position of the imaging device 51 approaches the next imaging position 181B, the output power of the sound increases, and maximum continuous sound is output at the imaging position 181B.

Although the example in which a sound pattern is changed has been described, a vibration pattern can be similarly controlled.

The imaging device 51 may notify the user that it is the imaging timing or that the imaging timing is close by using the display image displayed on the display 54 of the interface device 53 instead of sound or vibration.

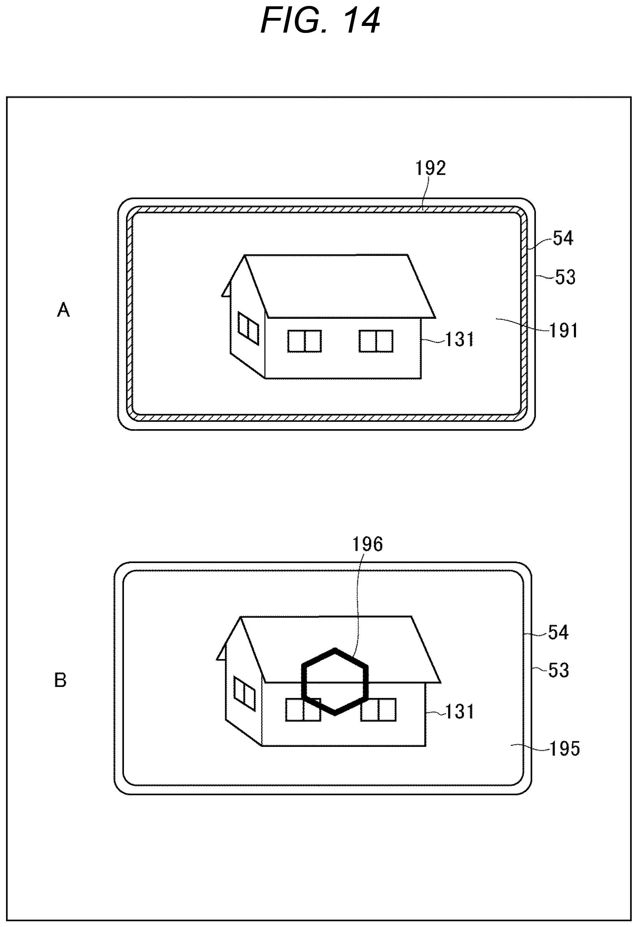

Fig. 14 indicates an example of notifying the user that it is the imaging timing or that the imaging timing is close by the display image.

In A of Fig. 14, a display image 191 obtained by superimposing a guide image on the captured image supplied from the image sensor 32 is displayed on the display 54. The display image 191 includes the 3D object 131, which is the subject of the 3D modeling target. Furthermore, in the display image 191, a display frame 192 as guidance for visually notifying the user of the imaging timing is displayed. The imaging control unit 24 controls the display frame 192 to be displayed (lighted) in a case where the user has moved to the appropriate imaging position. Alternatively, display control may be performed such that the display frame 192 is displayed in a blinking manner such that a blinking interval becomes shorter as approaching the appropriate imaging position, and is displayed (lighted) at the appropriate imaging position.

In B of Fig. 14, a display image 195 obtained by superimposing a guide image on the captured image supplied from the image sensor 32 is displayed on the display 54. The display image 195 includes the 3D object 131, which is the subject of the 3D modeling target. Furthermore, in the display image 195, a self-indicator 196 is displayed. The self-indicator 196 indicates a center of an imaging angle of view of the imaging unit 20, and is a display frame that serves as guidance for the position (camera position) of the imaging device 51, an autofocus control target area, and a notable area of the subject. In a case where the user has moved to the appropriate imaging position, the imaging control unit 24 performs display control such that the color of the self-indicator 196 is changed, the self-indicator 196 is displayed in a blinking manner such that the blinking interval becomes shorter as approaching the appropriate imaging position, and the self-indicator is displayed (lighted) at the appropriate imaging position or the color is changed. Furthermore, the imaging control unit 24 may perform display control such that a size of the self-indicator 196 to be blinked is gradually increased as approaching the appropriate imaging position, and is reduced (returned to the reference size) in a case where the user has moved to the appropriate imaging position.

Alternatively, in a case where the user has moved to the appropriate imaging position, the imaging control unit 24 may display, on the display 54, a display image in which characters as guidance are superimposed on the captured image, such as "It is the imaging timing. Please stop.".

In addition, as an example of the visual notification, a lighting device such as LED lighting, a tally lamp, and AF auxiliary light included in the imaging device 51 or the smartphone may be turned on as in the above example, or may be blinked in a predetermined pattern as approaching the recommended imaging position, thereby notifying the user that it is the imaging timing or that the imaging timing is close.

### <7. Example of Combination with Recommended Imaging Position Guide Mark>

In the above-described example, whether or not the user has moved to the appropriate imaging position is determined on the basis of the movement distance from the previous imaging position and the imaging direction calculated from the pose information of the imaging device 51. However, the imaging device 51 may display an imaging position (recommended imaging position) recommended as the appropriate imaging position on the display 54 as a guide mark.

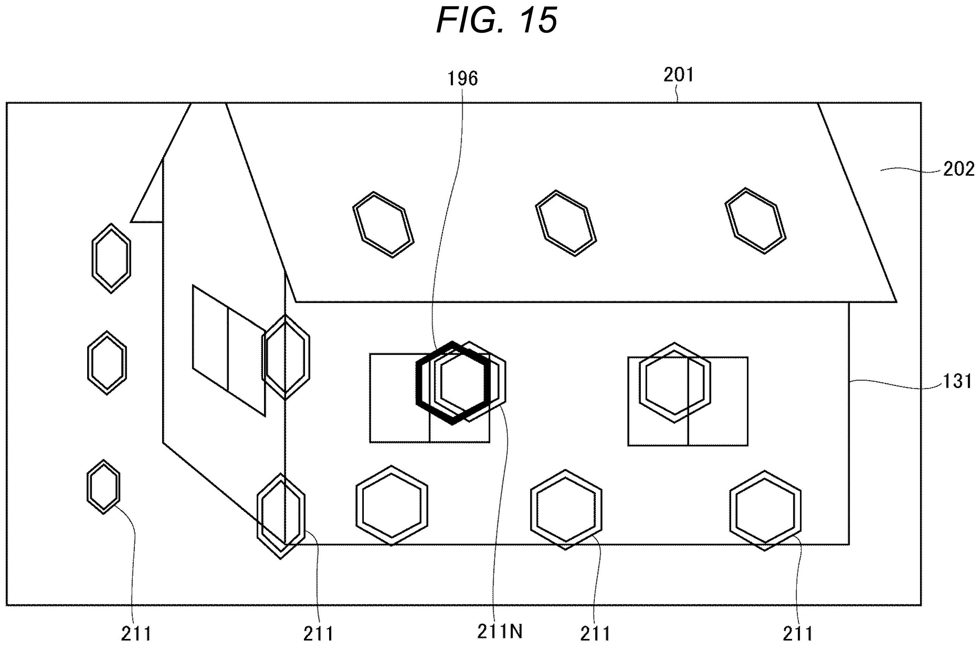

Fig. 15 illustrates an example of a navigation screen displayed on the display 54 of the interface device 53 during imaging.

On the navigation screen 201 in Fig. 15, the self-indicator 196 (first indicator) and a target indicator 211 (second indicator) are displayed so as to be superimposed on a captured image 202 captured by the image sensor 32. The target indicator 211 is a guide mark indicating a recommended imaging position set for the subject. The target indicator 211 is calculated on the basis of the level of detail of the 3D model, the overlap ratio, the orientation (facing degree) with respect to the subject, and the like. Here, an example in which the self-indicator 196 and the target indicator 211 have hexagonal shapes is illustrated, but the shapes of these indicators are not limited to hexagonal shapes. For example, the shape may be a quadrangular shape or a circular shape. The target indicator 211 and the self-indicator 196 are displayed in different forms, such as different colors and luminance of frames or different types of frame lines, for example, so that the user can distinguish them. For example, the target indicator 211 is white, and the self-indicator 196 is yellow. The self-indicator 212 is fixed to the approximate center of the image, and the position of target indicator 211 moves with the movement of the user (the camera position held by the user).

When the user moves from the current position and changes the position and distance with respect to the subject, the size and shape of each target indicator 211 around the self-indicator 196 disposed at the approximate center of the angle of view on the navigation screen 201 change. The user adjusts the position and distance of self-indicator 196 with respect to the subject to match a desired target indicator 211.

A scene is assumed where the user is about to move to a target indicator 211N, which is one of the plurality of target indicators 211 displayed on the navigation screen 201. In order to adjust the self-indicator 196 to the target indicator 211N, when the self-indicator 196 becomes close to the target indicator 211N, the user carefully operates so that the self-indicator 196 and the target indicator 211N overlap, which essentially results in the imaging device 51 being in a stationary state. The imaging control unit 24 determines whether or not the self-indicator 196 and the target indicator 211N match, and when it is determined that they match, further determines whether or not they are stationary. Then, in a case where it is determined that they are stationary, the imaging control unit 24 transmits imaging control information for turning on the shutter to the imaging unit 20, and causes the imaging unit 20 to execute imaging as image acquisition processing. In this way, by displaying the target indicator 211 which is the guide mark indicating the recommended imaging position, it is possible to cause the user to perform an operation carefully, and by using the stationary determination together, it is possible to perform high-quality imaging with less blurring.

On the other hand, in a case where the target indicator 211N is displayed, it is also assumed that the user's excessive attempts to adjust to the target indicator 211N will prevent the imaging device 51 from stopping, leading to a continued state where it cannot be determined that the imaging device 51 is stationary. However, the recommended imaging position has a certain degree of tolerance for the overlap ratio or the like, and does not need to be adjusted strictly.

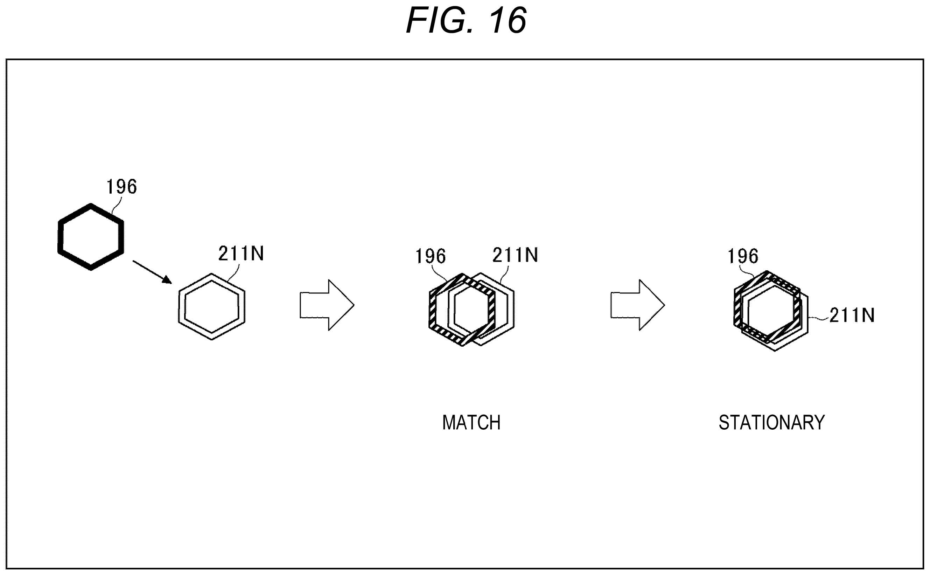

Therefore, in a case where the self-indicator 196 and the target indicator 211N are sufficiently superimposed and it can be determined that the self-indicator 196 and the target indicator 211N match, the imaging control unit 24 changes the self-indicator 196 by changing the color of the self-indicator 196 or performing animation display as illustrated in Fig. 16, thereby preventing the self-indicator 196 from being excessively adjusted and urging the user to shift to the operation to make the device stationary. In Fig. 16, the change in color of the self-indicator 196 is indicated by hatching.

### <8. Processing Flow of Timing-Presentation Stationary-Determination Automatic Imaging Processing>

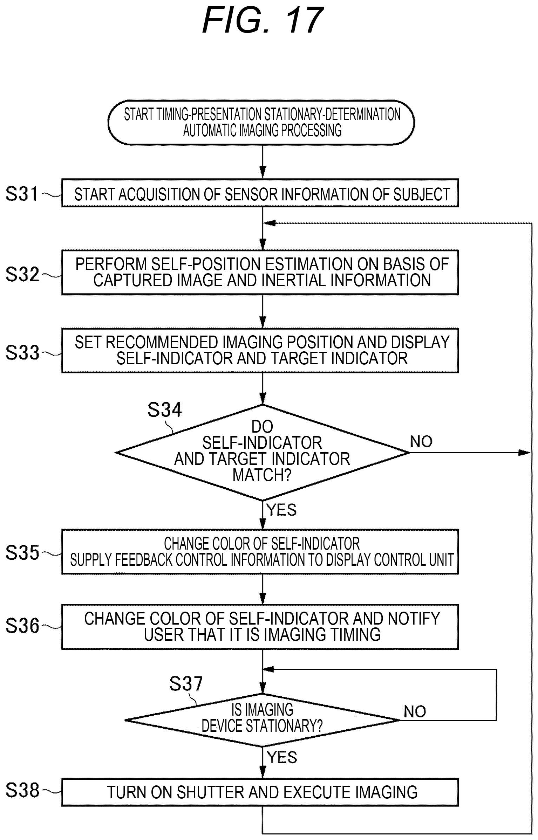

Fig. 17 is a flowchart of the timing-presentation stationary-determination automatic imaging processing of displaying the self-indicator 196 and the target indicator 211 on the display 54, and changing the color of the self-indicator 196 to urge the user to make the device stationary. This processing starts, for example, when the operation to start imaging is performed in the imaging device 51.

First, in step S31, each sensor of the sensor unit 52 starts acquisition of sensor information and outputs the acquired sensor information to the subsequent stage. Specifically, the depth sensor 31 acquires distance information with respect to the subject as sensor information, and supplies it to the TSDF update unit 35. The image sensor 32 acquires captured images of a subject as sensor information, and supplies them to the SLAM 34 and the display image generation unit 28. The IMU 33 acquires inertial information of the imaging device 51 as sensor information and supplies it to the SLAM 34 and the stationary determination unit 37. Thereafter, the acquisition of the sensor information and the output to the subsequent stage are continuously executed until the timing-presentation stationary-determination automatic imaging processing is ended.

In step S32, the SLAM 34 performs self-position estimation on the basis of the captured image supplied from the image sensor 32 and the inertial information supplied from the IMU 33, and generates pose information indicating a position and pose of the imaging device 51. The SLAM 34 supplies the generated pose information to the imaging control unit 24, the TSDF update unit 35, the stationary determination unit 37, and the like.

In step S33, the imaging control unit 24 sets a recommended imaging position for the subject included in the captured image, and causes a display image in which the self-indicator 196 and the target indicator 211 are superimposed as guidance to be generated and displayed. The display control unit 26 generates a display image and displays the display image on the display 54 as the image output unit 65 under the control of the imaging control unit 24. The captured image may be an image by the image sensor 32 or an image by the imaging unit 20.

In step S34, the imaging control unit 24 determines whether or not the self-indicator matches a predetermined target indicator, in other words, whether or not the user has moved to a predetermined recommended imaging position, on the basis of the pose information from the SLAM 34. As described above, the match between the self-indicator and the predetermined target indicator is not strict, and if the self-indicator falls within a predetermined range with respect to the predetermined target indicator, it can be determined that the self-indicator and the predetermined target indicator match. In a case where it is determined in step S34 that the self-indicator and the predetermined target indicator do not match, the processing returns to step S32, and the processes of steps S32 to S34 are repeated. The processes of steps S32 to S34 are repeatedly executed at predetermined intervals, for example, for each frame at a frame rate of 30 fps.

Then, in a case where it is determined in step S34 that the self-indicator and the predetermined target indicator match, the processing proceeds to step S35, and the imaging control unit 24 supplies feedback control information for changing the color of the self-indicator to the display control unit 26.

In step S36, the display control unit 26 acquires the feedback control information, generates a display image in which the color of the self-indicator is changed, and supplies the display image to the image output unit 65. The image output unit 65 displays the display image in which the color of the self-indicator is changed, and notifies the user that it is the imaging timing. In other words, the imaging device 51 instructs the user to make the camera position stationary by changing the color of the self-indicator.

In step S37, the stationary determination unit 37 determines whether or not the imaging device 51 is stationary on the basis of the inertial information from the IMU 33 or the pose information from the SLAM 34, and supplies stationary determination information indicating whether or not it is stationary to the imaging control unit 24. The processing of step S37 is repeated until it is determined that the imaging device 51 is stationary, and in a case where it is determined that the imaging device 51 is stationary, the processing proceeds to step S38.

In step S38, the imaging control unit 24 transmits imaging control information for turning on the shutter to the imaging unit 20, and causes the imaging unit 20 to execute imaging as image acquisition processing. The imaging unit 20 acquires the imaging control information from the imaging control unit 24, and captures images as image acquisition processing.

After step S38, the processing returns to step S32, and the processes of steps S32 to S38 described above are repeated. That is, it is determined whether or not the user has moved to the next recommended imaging position, and in a case where it is determined that the user has moved, the color of the self-indicator is changed, and a series of processes of executing imaging at a point in time when the user makes the imaging device 51 stationary is repeated.

The timing-presentation stationary-determination automatic imaging processing is executed as described above.

Note that also in a case where the display of the self-indicator 196 is controlled to urge the user to make the device stationary, the display pattern of the self-indicator 196 may be changed as approaching the recommended imaging position, as described with reference to Fig. 13.

### <9. Processing Flow of Timing-Presentation Stationary-Determination Automatic Imaging Processing with Excess Prevention Determination Function>

In the timing-presentation stationary-determination automatic imaging processing, as described above, the user is notified to make the device stationary by sound, vibration, an image, or the like. However, in imaging using a monopod or a tripod, in a case where the user follows the notification and makes the device stationary, the post-stationary position may deviate from the appropriate imaging position depending on the installation situation of the monopod or the tripod.

Therefore, the imaging device 51 may perform control to further determine whether or not it is at the appropriate imaging position after becoming stationary.

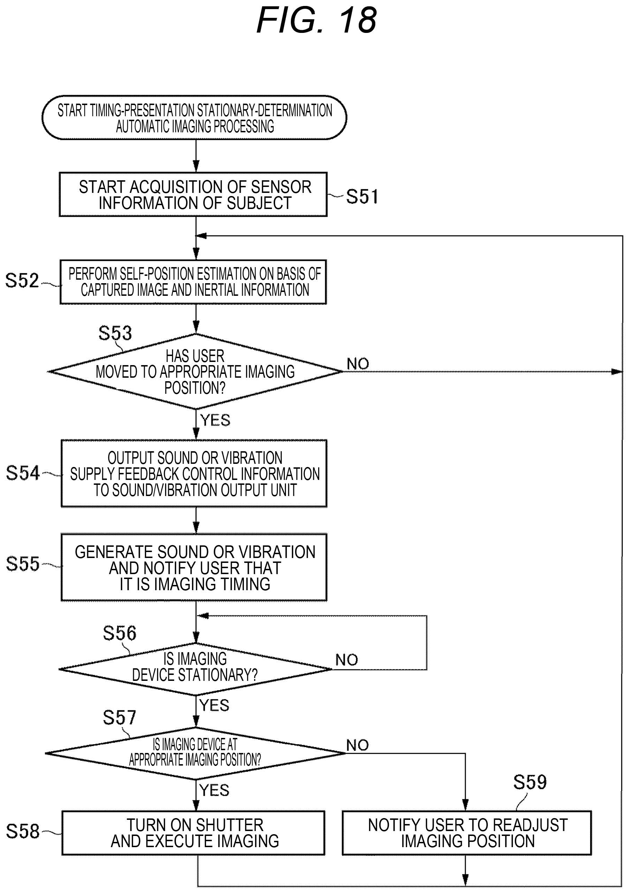

Fig. 18 is a flowchart of timing-presentation stationary-determination automatic imaging processing with an excess prevention determination function for determining whether or not it is at the appropriate imaging position after becoming stationary. This processing starts, for example, when the operation to start imaging is performed in the imaging device 51.

Steps S51 to S56 in Fig. 18 are similar to steps S11 to S16 in Fig. 12, respectively, and thus description thereof is omitted. In other words, the timing-presentation stationary-determination automatic imaging processing with the excess prevention determination function in Fig. 18 is processing in which steps S57 and S59 are added as the excess prevention determination function to the timing-presentation stationary-determination automatic imaging processing in Fig. 12.

In a case where it is determined in step S56 that the imaging device 51 is stationary, the processing proceeds to step S57, and the imaging control unit 24 determines whether or not the imaging device 51 is at the appropriate imaging position on the basis of the inertial information from the IMU 33 or the pose information from the SLAM 34. Then, in a case where it is determined in step S56 that the imaging device 51 is at the appropriate imaging position, the processing proceeds to step S58, and the imaging control unit 24 transmits imaging control information for turning on the shutter to the imaging unit 20 and causes the imaging unit 20 to execute imaging as image acquisition processing. The imaging unit 20 acquires the imaging control information from the imaging control unit 24, and captures images as image acquisition processing. The processing in step S58 is similar to that in step S17 in Fig. 12.

On the other hand, in a case where it is determined in step S56 that the imaging device 51 is not at the appropriate imaging position, the processing proceeds to step S59, and the imaging control unit 24 notifies the user to readjust the imaging position by sound, vibration, or an image. For example, the imaging control unit 24 notifies the user to readjust the imaging position by outputting a voice message such as "You have gone too far. Please return the imaging position." or by displaying an image with the characters of the message superimposed. The image may be the image display such as an arrow indicating a moving direction instead of the characters of the message. After step S59, the processing returns to step S52, and the processes after step S52 are repeated. Therefore, in a case where the position of the imaging device 51 has gone too far after the stationary determination, the imaging control unit 24 urges the user to obtain the optimal imaging position again without releasing the shutter.

In the timing-presentation stationary-determination automatic imaging processing with the excess prevention determination function, as described above, it is further determined whether or not the post-stationary position is the appropriate imaging position, and in a case where the post-stationary position is not the appropriate imaging position, the user is urged to move to the optimal imaging position, and in a case where it is determined that the post-stationary position is the appropriate imaging position, imaging is executed. With this arrangement, it is possible to cope with a case where the post-stationary position deviates from the appropriate imaging position.

### <10. Conclusion>

The imaging device 51 includes an imaging control unit 24 that performs control to notify a user that it is an imaging timing in a case where a self-position is a predetermined imaging position in imaging of 3D modeling, a detection unit that detects its own movement after notifying the user that it is the imaging timing, and a stationary determination unit 37 that determines whether or not its own movement is stationary on the basis of a result of the detection unit, and the imaging control unit 24 performs control to execute imaging in a case where its own movement is stationary. The detection unit that detects the movement of the imaging device 51 includes an IMU 33 or an SLAM 34. The predetermined imaging position is, for example, an appropriate imaging position determined from the immediately previous imaging position on the basis of the level of detail of the 3D model to be generated, the interval between the imaging positions at which the captured images have an appropriate overlap ratio, the orientation (facing degree) with respect to the subject, and the like. The user is notified that it is the imaging timing, by sound, vibration, or an image. With this arrangement, the user is urged to perform a stationary operation. As a result, only by moving the imaging device 51, the user can execute imaging in a state where the user is reliably stationary relatively easily and with a good tempo, whereby high-quality imaging with little blurring can be performed.

In the above-described example, an example in which the first 3D modeling is performed by real-time 3D modeling and the second 3D modeling is performed by photogrammetry or neural rendering has been described, but it can be applied to any method of reconfiguring (restoring) a three-dimensional shape.

In the present specification, the steps described in the flowcharts may be executed not only, needless to say, in time series in the described order, but also in parallel or as needed at a timing when a call is made, or the like, even if the steps are not processed in time series.

Furthermore, in the present specification, a system means a set of a plurality of components (devices, modules (parts), or the like), and it does not matter whether or not all the components are in the same housing. Therefore, a plurality of devices housed in separate housings and connected to each other via a network and one device including a plurality of modules housed in one housing are both systems.

Embodiments of the present disclosure are not limited to the above-described embodiment, and various modifications may be made without departing from the scope of the technology of the present disclosure.

For example, it is possible to adopt a mode obtained by combining all or some of the embodiment described above.

For example, the technology according to the present disclosure can provide a configuration of cloud computing in which one function is shared and processed by a plurality of devices cooperating with each other via a network. Furthermore, each step described in the flowchart described above may be executed by a single device, or may be executed by a plurality of devices in a shared manner. Moreover, in a case where a plurality of processes is included in one step, the plurality of processes included in the one step can be executed by one device or executed by a plurality of devices in a shared manner.

Note that the effects described in the present specification are merely examples and are not restrictive, and there may be effects other than those described in the present specification.

Note that the technology of the present disclosure can adopt the following configurations.
(1) An imaging device including:
   an imaging control unit that performs control to notify a user that it is an imaging timing in a case where a self-position is a predetermined imaging position in imaging of 3D modeling;
   a detection unit that detects its own movement after notifying the user that it is the imaging timing; and
   a stationary determination unit that determines whether or not its own movement is stationary on the basis of a result of the detection unit, in which
   the imaging control unit performs control to execute imaging in a case where its own movement is stationary.
(2) The imaging device according to (1), in which
   the imaging control unit performs control to notify the user that it is the imaging timing by sound, vibration, or an image in a case where the self-position is the predetermined imaging position.
(3) The imaging device according to (2), in which
   the imaging control unit further performs control to change the sound, the vibration, or a pattern of the image as approaching the imaging position.
(4) The imaging device according to (3), in which
   the imaging control unit performs control to change the sound, the vibration, or an interval or a size of the image as approaching the imaging position.
(5) The imaging device according to any one of (1) to (4), further including:
   a display control unit that displays a first indicator indicating the self-position and a second indicator indicating the imaging position, in which
   the imaging control unit performs control to notify the user that it is the imaging timing in a case where it is determined that the first indicator and the second indicator on a screen match.
(6) The imaging device according to (5), in which
   the imaging control unit performs control to change the first indicator to notify the user that it is the imaging timing.
(7) The imaging device according to any one of (1) to (6), in which
   the detection unit includes an IMU that detects inertial information of the imaging device.
(8) The imaging device according to any one of (1) to (7), in which
   the detection unit includes a self-position estimation unit that performs self-position estimation on the basis of a captured image and inertial information and generates pose information indicating a position and pose of the imaging device.
(9) The imaging device according to any one of (1) to (8), in which
   the imaging control unit further performs control to determine whether or not the self-position is the imaging position in a case where its own movement is stationary, and notify the user that it is the imaging timing in a case where it is determined that the self-position is the imaging position.
(10) An imaging method, by an imaging device, including:
   performing control to notify a user that it is an imaging timing in a case where a self-position is a predetermined imaging position in imaging of 3D modeling;
   detecting its own movement after notifying the user that it is the imaging timing;
   determining whether or not its own movement is stationary on the basis of a result of detecting its own movement; and
   performing control to execute imaging in a case where its own movement is stationary.
(11) A program for causing a computer to execute processing including:
   performing control to notify a user that it is an imaging timing in a case where a self-position is a predetermined imaging position in imaging of 3D modeling;
   detecting its own movement after notifying the user that it is the imaging timing;
   determining whether or not its own movement is stationary on the basis of a result of detecting its own movement; and
   performing control to execute imaging in a case where its own movement is stationary.

### REFERENCE SIGNS LIST

- 20: Imaging unit
- 21: Operation unit
- 22: Image processing unit
- 23: Storage unit
- 24: Imaging control unit
- 25: Scoring processing unit
- 26: Display control unit
- 27: Superimposed image generation unit
- 28: Display image generation unit
- 29: Communication unit
- 30: Output unit
- 31: Depth sensor
- 32: Image sensor
- 35: TSDF update unit
- 36: Mesh generation unit
- 37: Stationary determination unit
- 40: Server device
- 41: Communication unit
- 42: Photogrammetry processing unit
- 43: Storage unit
- 51: Imaging device
- 52: Sensor unit
- 53: Interface device
- 54: Display
- 55: Display
- 56: Viewfinder
- 57: Main body
- 58: Lens barrel
- 65: Image output unit
- 66: Vibration output unit
- 70: Information processing device
- 71: CPU
- 72: ROM
- 73: RAM
- 74: Nonvolatile memory unit
- 75: Input/output interface
- 76: Input unit
- 77: Display unit
- 78: Voice output unit
- 79: Storage unit
- 80: Communication unit
- 81: Drive
- 82: Removable recording medium
- 83: Bus
- 84: Sensor unit
- 85: Image processing unit

## Claims

1. An imaging device comprising:
an imaging control unit that performs control to notify a user that it is an imaging timing in a case where a self-position is a predetermined imaging position in imaging of 3D modeling;
a detection unit that detects its own movement after notifying the user that it is the imaging timing; and
a stationary determination unit that determines whether or not its own movement is stationary on a basis of a result of the detection unit, wherein
the imaging control unit performs control to execute imaging in a case where its own movement is stationary.

2. The imaging device according to claim 1, wherein
the imaging control unit performs control to notify the user that it is the imaging timing by sound, vibration, or an image in a case where the self-position is the predetermined imaging position.

3. The imaging device according to claim 2, wherein
the imaging control unit further performs control to change the sound, the vibration, or a pattern of the image as approaching the imaging position.

4. The imaging device according to claim 3, wherein
the imaging control unit performs control to change the sound, the vibration, or an interval or a size of the image as approaching the imaging position.

5. The imaging device according to claim 1, further comprising:
a display control unit that displays a first indicator indicating the self-position and a second indicator indicating the imaging position, wherein
the imaging control unit performs control to notify the user that it is the imaging timing in a case where it is determined that the first indicator and the second indicator on a screen match.

6. The imaging device according to claim 5, wherein
the imaging control unit performs control to change the first indicator to notify the user that it is the imaging timing.

7. The imaging device according to claim 1, wherein
the detection unit includes an IMU that detects inertial information of the imaging device.

8. The imaging device according to claim 1, wherein
the detection unit includes a self-position estimation unit that performs self-position estimation on a basis of a captured image and inertial information and generates pose information indicating a position and pose of the imaging device.

9. The imaging device according to claim 1, wherein
the imaging control unit further performs control to determine whether or not the self-position is the imaging position in a case where its own movement is stationary, and notify the user that it is the imaging timing in a case where it is determined that the self-position is the imaging position.

10. An imaging method, by an imaging device, comprising:
performing control to notify a user that it is an imaging timing in a case where a self-position is a predetermined imaging position in imaging of 3D modeling;
detecting its own movement after notifying the user that it is the imaging timing;
determining whether or not its own movement is stationary on a basis of a result of detecting its own movement; and
performing control to execute imaging in a case where its own movement is stationary.

11. A program for causing a computer to execute processing comprising:
performing control to notify a user that it is an imaging timing in a case where a self-position is a predetermined imaging position in imaging of 3D modeling;
detecting its own movement after notifying the user that it is the imaging timing;
determining whether or not its own movement is stationary on a basis of a result of detecting its own movement; and
performing control to execute imaging in a case where its own movement is stationary.
